# EUROPÄISCHE PATENTSCHRIFT

(11) **EP 1 198 661 B1**
(45) Veröffentlichungstag und Bekanntmachung des Hinweises auf die Patenterteilung: **07.05.2003**
(21) Anmeldenummer: 01911565.8
(22) Anmeldetag: 26.01.2001
(51) Int. Cl.: F02B 31/08

(54) **STEUERUNGSVERFAHREN FÜR LADUNGSBEWEGUNGSEINRICHTUNGEN**
METHOD FOR CONTROLLING CHARGE ADJUSTMENT DEVICES
PROCEDE DE COMMANDE POUR DES UNITES DE DEPLACEMENT DE CHARGE

(30) Priorität: 28.01.2000 DE 10003790
(43) Veröffentlichungstag der Anmeldung: 24.04.2002
(73) Patentinhaber: Ford Global Technologies, Inc., Dearborn, Michigan 48126 (US)
(72) Erfinder: LENZ, Ingo, 50933 Köln (DE); GLAHN, Claus, 45468 Mühlheim/Ruhr (DE); LIMBACH, Sigurd, 42657 Solingen (DE)
(74) Vertreter: Drömer, Hans-Carsten, Dipl.-Ing.
(86) Internationale Anmeldenummer: EP0101040
(87) Internationale Veröffentlichungsnummer: WO01055569

(56) Entgegenhaltungen:
- US-A- 5 522 360
- US-A- 5 740 778

## Beschreibung

Die Erfindung betrifft ein Steuerungsverfahren für Ladungsbewegungseinrichtungen vor allem in direkteinspritzenden Verbrennungsmotoren, wobei die Ladungsbewegungseinrichtungen in Einlaßkanälen angeordnet sind.

Bei direkteinspritzenden Verbrennungsmotoren und bei kanaleinspritzenden Verbrennungsmotoren, die Einlaßkanäle aufweisen in die nicht eingespritzt wird, treten an den Einlaßventilen unerwünschte Ablagerungen aus unverbranntem Kraftstoff, Verbrennungsgasbestandteilen und Schmierölrückständen auf. Die Ursache ist unter anderem in den Ladungsbewegungseinrichtungen zu sehen, die je nach Betriebszustand des Motors die angesaugte Frischluft drosseln bzw. bei mehreren Einlaßkanälen pro Zylinder einzelne Einlaßkanäle teilweise oder ganz schließen mit dem Ziel, die Verbrennung im Verbrennungsraum zu ermöglichen bzw. zu optimieren.

Beim Übergang des Motors vom Last- in den Schubbetrieb werden die Ladungsbewegungseinrichtungen in die Leerlaufstellung gebracht, d. h. sie sperren die Frischluftzufuhr fast ab. Für das im Einlaßkanal mit Ladungsbewegungseinrichtung angeordnete Einlaßventil stellt dies einen sehr unvorteilhaften Betriebszustand dar. Beim Übergang vom Last- in den Schubbetrieb wird das heiße Einlaßventil plötzlich von der Frischluftzufuhr abgeschnitten und kühlt daher nur langsam ab. Durch die Drosselung entsteht im Schubbetrieb ein Unterdruck in den Einlaßkanälen mit Ladungsbewegungseinrichtungen. Dadurch wird aus den Ventilführungen verstärkt Schmieröl angesaugt, welches im Falle der heißen Ventile zu erhöhten Ablagerungen beiträgt. Durch das Rückströmen von Verbrennungsgasen während des letzten gefeuerten Arbeitsspiels befinden sich unverbrannte Kraftstoffe, Verbrennungsgasbestandteile und Schmierölbestandteile in den Einlaßkanälen. Durch das Schließen der Ladungsbewegungseinrichtung verbleiben diese Rückstände für längere Zeit im Einlaßkanal und führen zu zusätzlichen Ablagerungen.

Aus der US-A-5522360 ist eine Luftzufuhreinrichtung für eine Brennkraftmaschine und das dazugehörige Steuerverfahren beschrieben. Die Steuerung der zugeführten Luft in die Brennstoffkammer erfolgt über ein zweites Einlaßventil in der Einlaßöffnung parallel zu einem ersten Einlaßventil. Bei dieser Erfindung ist es vorgesehen, das zweite Einlaßventil in Abhängigkeit von der Motordrehzahl und der Motorlast so lange geschlossen zu halten, bis eine vorher bestimmte Motordrehzahl erreicht wird. Erst bei Überschreiten dieser Motordrehzahl wird das zweite Einlaßventil wie das erste Einlaßventil geöffnet bzw. betätigt. Der Nachteil dieser Anordnung liegt darin, daß das zweite Einlaßventil bei Teillast meistens geschlossen ist und es dadurch zu unerwünschten Verkokungen am zweiten Einlaßventil kommen kann.

Aufgabe der Erfindung ist es demnach, ein Steuerungsverfahren für Ladungsbewegungseinrichtungen vor allem in direkteinspritzenden Verbrennungsmotoren zu schaffen, das Ablagerungen an den Einlaßventilen aus unverbrannten Kraftstoffen, Verbrennungsgasbestandteilen und Schmierölrückständen reduziert.

Die Aufgabe wird erfindungsgemäß dadurch gelöst, daß während des Schubbetriebes des Verbrennungsmotors die Ladungsbewegungseinrichtungen nicht geschlossen sind. Sobald der Motor in den Schubbetrieb übergeht, werden alle Ladungsbewegungseinrichtungen geöffnet und Frischluft kann ungedrosselt in den Brennraum strömen. Dies ist unabhängig davon ob der Motor vorher unter Vollast, Teillast oder im Leerlauf lief.

Dieses Verfahren kann angewendet werden bei allen Verbrennungsmotoren, die Einlaßkanäle mit Ladungsbewegungseinrichtungen aufweisen und bei denen alle oder ein Teil der Einlaßkanäle nur der Frischluftzufuhr ohne Kraftstoffbeimengung dienen.

Dieses Steuerungsverfahren hat folgende günstige Eigenschaften zur Verhinderung von Ablagerungen auf den Einlaßventilen:
Alle Einlaßventile kühlen im Schubbetrieb sehr schnell ab und erreichen damit ebenfalls sehr schnell einen günstigen "Niedertemperaturbereich", in dem die Ventile durch das Schmieröl, das dann an den Ventilen entlangläuft, gereinigt werden und somit Ablagerungen verhindert werden.
Durch die fehlende Drosselung entsteht im Schubbetrieb kein Unterdruck in den Einlaßkanälen mit Ladungsbewegungseinrichtungen. Damit reduziert

sich das angesaugte Schmieröl aus den Ventilführungen, welches im Falle der heißen Ventile bei geschlossener Ladungsbewegungseinrichtung zu den verstärkten Ablagerungen beiträgt.

Durch das Öffnen der Ladungsbewegungseinrichtung verbleiben die zurückgeströmten unverbrannten Kraftstoffe, Verbrennungsgasbestandteile und Schmierölbestandteile nicht für längere Zeit im Einlaßkanal und führen somit nicht zu zusätzlichen Ablagerungen.

## Patentansprüche

1. Verfahren zur Steuerung von Ladungsbewegungseinrichtungen eines Verbrennungsmotors, wobei die Ladungsbewegungseinrichtungen im Ansaugbereich der Einlaßkanäle angeordnet sind,
**dadurch gekennzeichnet, dass**
alle Ladungsbewegungseinrichtungen geöffnet werden sobald der Motor in den Schubbetrieb übergeht, unabhängig davon ob der Motor vorher unter Vollast, Teillast oder im Leerlauf lief.

## Claims

1. Method for the control of charge movement devices of an internal combustion engine, the charge movement devices being arranged in the intake region of the inlet ducts, **characterized in that** all the charge movement devices are opened as soon as the engine goes into the overrun mode, irrespective of whether the engine has previously been running under full load, part load or no load.

## Revendications

1. Procédé de commande pour des dispositifs de déplacement de charge d'un moteur à combustion interne, les dispositifs de déplacement de charge étant disposés dans la région d'aspiration des conduits d'admission,
**caractérisé en ce que**
tous les dispositifs de déplacement de charge sont ouverts dès que le moteur passe en fonctionnement en poussée, indépendamment du fait que le moteur était auparavant en pleine charge, en charge partielle ou au ralenti.
